# DEMANDE DE BREVET EUROPEEN

(11) **EP 2 985 149 A1**
(43) Date de publication de la demande: **17.02.2016**
(21) Numéro de dépôt: 14306268.5
(22) Date de dépôt: 12.08.2014
(51) Int. Cl.: B32B 38/06, B30B 15/06, B42D 25/40

(54) **Plaque de lamination, procédé de fabrication d'une telle plaque, et utilisation de la plaque pour la fabrication de produits plats par lamination.**

(71) Demandeur: Gemalto SA, 92190 Meudon (FR)
(72) Inventeur: Andrieux, David, 92190 Meudon (FR); Subra, Sébastien, 92190 Meudon (FR)
(74) Mandataire: Cour, Pierre

(57) **Abrégé**

Pour fabriquer par lamination des produits plats en matière plastique, tels que cartes à puce ou similaires, comportant des reliefs prédéterminés à réaliser sur une surface desdits produits plats lors de la lamination, on utilise une plaque de lamination comportant des reliefs correspondants en négatif auxdits reliefs prédéterminés, les reliefs de ladite plaque de lamination étant réalisés par impression 3D de métal.

## Description

La présente invention concerne la fabrication par lamination de produits plats, typiquement constitués de plusieurs couches de matière plastiques assemblées par collage, thermosoudage ou autre procédé d'assemblage similaire, tels que des corps de cartes à puce, en particulier destinées à une utilisation comme cartes bancaires, ou autres cartes d'identification. Elle concerne plus particulièrement un nouveau procédé de fabrication de plaques de lamination, les plaques de lamination obtenues par ce procédé. Elle concerne aussi le procédé de fabrication par lamination de produits plats par utilisation d'une telle plaque de lamination.

Typiquement, un corps de carte se présente sous la forme d'un parallélépipède rectangle d'épaisseur réduite, typiquement entre 780 et 840 µm. Un procédé connu de fabrication de telles cartes consiste à empiler les différents couches, ou feuilles, internes, et des feuilles de surface sont disposées de part et d'autres du corps et laminées avec celui-ci pour assurer leur assemblage final.

Les couches internes peuvent être prélaminées pour former le corps de carte, avant de placer de part et d'autre de cet ensemble prélaminé des feuilles constituant les couches de surface de la carte.

La lamination ou prélamination peut être effectuée à froid ou à chaud, en fonction du matériau des couches, typiquement du polychlorure de vinyle (PVC), des polyesters (PET), polycarbonates (PC) etc., et en utilisant plus ou moins de feuilles ou de couches dans les opérations de lamination. Les feuilles de surface peuvent être notamment formées préalablement par assemblage par lamination d'une couche opaque imprimée et d'une couche de couverture transparente.

Toutes ces opérations de préparation des cartes sont généralement effectuées, de manière connue, sur des planches regroupant une pluralité de cartes, par exemple typiquement 24 ou 48 cartes par planche, chaque corps de carte étant ensuite découpé aux dimensions souhaitées par poinçonnage, de manière connue en soi.

Les opérations de lamination sont effectuées par des presses, en utilisant des plaques de lamination métalliques, typiquement en acier, pressées sur les faces opposées des dites planches de cartes.

Pour des besoins de sécurisation, de personnalisation ou par souci esthétique, il peut être souhaité de réaliser à la surface des cartes des reliefs divers, de faible hauteur ou profondeur. Dans ce cas, les plaques de lamination peuvent être gravées de manière à imprimer dans la matière plastique des couches de surface, lors de la lamination, les motifs gravés en négatifs sur les plaques de lamination. De tels motifs peuvent être notamment des inscriptions diverses, ou des motifs à but fonctionnel technique, par exemple pour former une lentille optique localisée sur une zone de la surface de la carte.

Un inconvénient et que le gravage des plaques de lamination, avec des gravures de faible épaisseur ne dépassant pas quelques centaines de µm, réalisé par gravure au laser sur des plaques en acier, est une opération coûteuse. Le temps nécessaire pour fabriquer ces plaques est aussi important. Il s'ensuit que ces opérations de réalisation de reliefs sur les cartes par lamination peuvent être réalisées pour des fabrications identiques en grande série, mais ne conviennent pas sur le plan économique pour fabriquer des plus petites séries, ou des opérations de personnalisation des cartes. Un autre inconvénient est que la gravure au laser ne permet que des épaisseurs de reliefs négatifs relativement faibles, et donc des profondeurs de reliefs sur les cartes relativement limités.

La présente invention a pour but de résoudre les problèmes évoqués ci-dessus, et vise en particulier à permettre la fabrication par lamination de cartes ou produits plats similaires, typiquement constitués de plusieurs couches de matière plastiques assemblées, comportant des reliefs de surface, plus simplement et plus rapidement, donc à un prix réduit. Elle vise aussi à permettre plus de souplesse dans la réalisation des telles cartes, avec notamment des profondeurs de reliefs plus importantes.

Avec ces objectifs en vue, l'invention a pour objet une plaque de lamination pour la fabrication par lamination de produits plats en matière plastique, ladite plaque de lamination comportant des reliefs correspondants en négatif à des reliefs prédéterminés à réaliser sur une surface desdits produits plats lors de la lamination, caractérisé en ce que les reliefs de ladite plaque de lamination sont réalisés par impression 3D de métal.

Selon une disposition particulière, la plaque de lamination est entièrement réalisée par impression 3D de métal.

Alternativement, les reliefs sont imprimés par impression 3D sur une plaque de lamination métallique plane préparée préalablement.

Préférentiellement, l'épaisseur du relief est inférieur ou égal à 200 µm, typiquement entre 10 et 100 µm.

Préférentiellement encore, l'épaisseur de la plaque de lamination ainsi imprimée est de 600 à 1000 µm, plus préférentiellement encore de l'ordre de 800µm, conduisant à une épaisseur maximale totale de 1 mm environ.

Les reliefs de la plaque de lamination sont préférentiellement en alliage de cobalt.

L'invention a aussi pour objet un procédé de fabrication de plaques de lamination comportant des reliefs, les dites plaques étant destinées à la mise en oeuvre du procédé de lamination de produits plats tel qu'indiqué précédemment, selon lequel les dits reliefs sont réalisés par impression 3D.

Ce nouveau procédé de réalisation des plaques de lamination offre plus de souplesse que les procédés connus par gravure laser ou similaire. Grâce à ce procédé, il devient possible de réaliser rapidement et à moindre coût des plaques de lamination comportant des reliefs, permettant de personnaliser les cartes fabriquées en petites séries.

L'invention a aussi pour objet un procédé de fabrication par lamination de produits plats en matière plastique, tels que cartes à puce ou similaires, selon lequel on place sur une presse de lamination des plaques de lamination, au moins une plaque de lamination comportant des reliefs correspondants en négatif à des reliefs prédéterminés à réaliser sur une surface desdits produits plats lors de la lamination, puis on assemble les différentes couches de matière plastique constitutives du produit plat par lamination entre lesdits plaques de lamination.

Selon l'invention, le procédé est caractérisé en ce que les plaques de lamination utilisées sont des plaques de lamination fabriquées en utilisant un procédé d'impression 3D de métal, comme indiqué précédemment.

Le relief de la plaque de lamination pourrait être localement en creux, mais généralement sera en surépaisseur, de manière à former à la surface des cartes un relief en creux par rapport au plan général de ladite surface.

Pour fabriquer des cartes avec un relief personnalisé en surface, on commence par créer la forme désirée de la planche de carte au moyen d'un logiciel de dessin 3D standard tel que Illustator®, Photoshop® ou similaire. Les logiciels de DAO/CAO comme Blender Sketchup® ou encore Freecad®, permettront ensuite de créer la forme pour impression 3D.

Le fichier obtenu est transmis à l'imprimante 3D, pour imprimer la plaque de lamination par un procédé d'impression 3D métallique, selon des formes correspondant en négatif aux reliefs désirés sur les cartes. L'imprimante 3D utilisée pourra typiquement être une imprimante 3D métal commercialisée par la société «3D Systems».

Typiquement, l'épaisseur de la plaque de lamination ainsi imprimée sera de l'ordre de 800µm, et avec un relief en surépaisseur de 200 µm maximum, conduisant à une épaisseur maximale de 1 mm.

Le matériau utilisé pour imprimer la plaque sera préférentiellement de la poudre de cobalt, qui présente une résistance mécanique plus forte notamment que la poudre d'aluminium. On pourra aussi utiliser toute autre poudre métallique résistant aux contraintes mécaniques et de température de la lamination.

Après impression, la rigidification définitive de la plaque de lamination est obtenue par passage dans un four, qui permet à la pièce imprimée d'être encore plus résistante.

On se sert ensuite de cette plaque de lamination imprimée pour effectuer la lamination des planches de cartes, formant ainsi le relief souhaité simultanément au laminage de la carte.

Alternativement, la réalisation du relief pourrait être fait en utilisant la plaque de lamination selon l'invention après une étape de lamination classique de la carte.

On notera incidemment que le procédé selon l'invention pourra notamment permettre la réalisation de texte en écriture Braille à destination des personnes mal voyantes.

L'invention n'est pas limitée au mode de réalisation décrit précédemment. En particulier, on pourra utiliser d'autres poudre métalliques que le cobalt. On pourrait aussi réaliser l'impression sur une plaque préparée plane, seuls les reliefs étant alors imprimés par impression 3D.

## Revendications

1. Plaque de lamination pour la fabrication par lamination de produits plats en matière plastique, ladite plaque de lamination comportant des reliefs correspondants en négatif à des reliefs prédéterminés à réaliser sur une surface desdits produits plats lors de la lamination, **caractérisée en ce que** les reliefs de ladite plaque de lamination sont réalisés par impression 3D de métal.

2. Plaque de lamination selon la revendication 2, **caractérisée en ce qu'**elle est entièrement réalisée par impression 3D de métal.

3. Plaque de lamination selon la revendication 1, **caractérisée en ce que** les reliefs sont imprimés par impression 3D sur une plaque de lamination métallique plane préparée préalablement

4. Plaque de lamination selon la revendication 1, **caractérisée en ce que** l'épaisseur du relief est inférieur ou égal à 200 µm, typiquement entre 10 et 100 µm.

5. Plaque de lamination selon la revendication 4, **caractérisée en ce que** l'épaisseur du relief est entre 10 et 100 µm.

6. Plaque de lamination selon la revendication 2, **caractérisée en ce que** l'épaisseur de la plaque de lamination est de 600 à 1000 µm, préférentiellement de l'ordre de 800µm.

7. Plaque de lamination selon la revendication 1, **caractérisée en ce que** les reliefs de la plaque de lamination sont en alliage de cobalt.

8. Procédé de fabrication de plaques de lamination comportant des reliefs selon l'une quelconque des revendications précédentes, **caractérisé en ce que** les dits reliefs sont réalisés par impression 3D.

9. Procédé selon la revendication 8, **caractérisé en ce que** la plaque de lamination est entièrement réalisée par impression 3D de métal.

10. Procédé selon la revendication 8, **caractérisé en ce que** les reliefs sont imprimés par impression 3D de métal sur une plaque de lamination métallique plane préparée préalablement

11. Procédé selon la revendication 8, **caractérisé en ce que** les reliefs sont imprimés par impression 3D en utilisant de la poudre de cobalt.

12. Procédé selon la revendication 8, **caractérisé en ce que** la plaque de lamination subit un passage au four après impression.

13. Procédé de fabrication par lamination de produits plats en matière plastique, tels que cartes à puce ou similaires, selon lequel on place sur une presse de lamination des plaques de lamination, au moins une plaque de lamination comportant des reliefs correspondants en négatif à des reliefs prédéterminés à réaliser sur une surface desdits produits plats lors de la lamination, puis on assemble les différentes couches de matière plastique constitutives du produit plat par lamination entre lesdits plaques de lamination, **caractérisé en ce que** les plaques de lamination utilisées sont des plaques de lamination selon l'une quelconque es revendications 1 à 7.
